# EUROPEAN PATENT SPECIFICATION

(11) **EP 3 754 358 B1**
(45) Date of publication and mention of the grant of the patent: **25.12.2024**
(21) Application number: 19180943.3
(22) Date of filing: 18.06.2019
(51) Int. Cl.: G01S 5/02, H04W 64/00

(54) **GENERATING A RADIO MAP FOR INDOOR POSITIONING**
ERSTELLUNG EINER FUNKKARTE ZUR POSITIONIERUNG IM INNENBEREICH
GÉNÉRATION D'UNE CARTE RADIO POUR UN POSITIONNEMENT INTÉRIEUR

(43) Date of publication of application: 23.12.2020
(73) Proprietor: HERE Global B.V., 5611 ZT Eindhoven (NL)
(72) Inventor: WIROLA, Lauri Aarne Johannes, 33100 Tampere (FI); NURMINEN, Henri Jaakko Julius, 33100 Tampere (FI); IVANOV, Pavel, 33100 Tampere (FI)
(74) Representative: Cohausz & Florack

(56) References cited:
- EP-A1- 2 833 676
- WO-A1-2013/000073
- WO-A1-2017/084713
- WO-A1-2017/185612
- WO-A1-2018/135923
- CN-A- 104 408 615
- CN-A- 104 618 905
- CN-A- 105 225 198
- CN-A- 109 309 568
- US-A1- 2010 306 831
- US-A1- 2014 341 198
- US-A1- 2018 247 313

## Description

### FIELD

The following disclosure relates to the field of indoor positioning, or more particularly relates to systems, apparatuses, and methods for determining a radio map at least partially based on a ranking of users/collectors that gathered/collected radio data.

### BACKGROUND

Indoor positioning requires novel systems and solutions that are specifically developed for this purpose. The traditional positioning technologies, which are mainly used outdoors, i.e. satellite and cellular positioning technologies, cannot deliver such performance indoors that would enable seamless and equal navigation experience in both environments. The required positioning accuracy (2-3 m), coverage (-100 %) and floor detection are challenging to achieve with satisfactory performance levels with the systems and signals simply do not penetrate through the walls and roofs for adequate signal reception and the cellular signals have too narrow bandwidth for accurate ranging by default.

Several indoor-dedicated solutions have been developed and commercially deployed during the past years e.g. solutions based on pseudolites (GPS (Global Positioning System)-like short range beacons), ultra-sound positioning, BTLE respectively BLE (Bluetooth Low Energy) signals (e.g. High Accuracy Indoor Positioning (HAIP)), and WiFi fingerprinting. What is typical to these solutions is that they require either deployment of totally new infrastructure (beacons, tags and so on) or manual exhaustive radio surveying of buildings including all the floors, spaces and rooms. This is rather expensive and will take a considerable amount of time to build the coverage to the commercial expected level, which in some cases narrowed the potential market segment only to very thin customer base e.g. for health care or dedicated enterprise solutions. Also, the diversity of these technologies makes it difficult to build a globally scalable indoor positioning solution, and the integration and testing will become complex if a large number of technologies needs to be supported in the consumer devices, such as smartphones.

For an indoor positioning solution to be commercially successful, that is 1) being globally scalable, 2) having low maintenance and deployment costs, and 3) offering acceptable end-user experience, the solution needs to be based on an existing infrastructure in the buildings and on existing capabilities in the consumer devices. This leads to an evident conclusion that the indoor positioning needs to be based on WiFi- and/or Bluetooth (BT)-technologies that are already supported in almost every smartphone, tablet, laptop and even in the majority of the feature phones. It is, thus, required to find a solution that uses the WiFi- and BT-radio signals in such a way that makes it possible to achieve 2-3 m horizontal positioning accuracy, close to 100 % floor detection with the ability to quickly build the global coverage for this approach.

A novel approach for radio-based indoor positioning that models e.g. the WiFi-radio environment (or any similar radio e.g. Bluetooth) from observed received signal strength (RSS-) measurements as two-dimensional radio maps is hereby able to capture the dynamics of the indoor radio propagation environment in a compressible and highly accurate way. This makes it possible to achieve unprecedented horizontal positioning accuracy with the WiFi-signals only within the coverage of the created radio maps and also gives highly reliable floor detection.

In addition to manual radio survey, huge volumes of indoor Wi-Fi measurements data could be harvested via crowd-sourcing if the consumer devices were equipped with the necessary functionality to enable the Wi-Fi data collection as a background process, naturally with the end-user consent. However, the technical challenges related to the harvesting, processing, redundancy, ambiguity and storing the crowd-sourced data need to be understood and solved before the Wi-Fi radio amp creation/generating can be based on the fully crowd-sourced data.

EP 2 833 676 A1 discloses a method of selecting a network node with which a mobile terminal is to establish a connection for wireless communication. The method comprises generating a ranked list of network nodes that are available to the mobile terminal for establishing the connection, each of the available network nodes being ranked based on historical data relating to a plurality of different radio characteristics of the network node and on weighting factors associated with the plurality of different radio characteristics, each of the weighting factors having a value that is determined based on historical data relating to one or more mobile terminal usage characteristics; and selecting the network node for establishing the connection with the mobile terminal based on the ranked list of network nodes.

US 2014/0341198 A1 discloses a method and device for building a Wi-Fi radio map. Especially, a device and method for building Wi-Fi radio map that is used to position locating service that utilizes Wi-Fi fingerprints that many, unspecified mobile terminals collect and provide, is disclosed. Specifically, the present invention provides, as methods for estimating position data for AP using Wi-Fi fingerprints collected by mobile terminals method for estimating position data for AP by linking Wi-Fi fingerprints and time data for collecting Wi-Fi signal, or method for estimating position data for AP through user address data comparison between Wi-Fi fingerprints without linking signal collection time data to Wi-Fi fingerprints. Accordingly, it has effects of epoch-making economic feasibility compared to prior art that requires huge cost in collecting Wi-Fi fingerprint like war driving.

### SUMMARY OF SOME EXEMPLARY EMBODIMENTS

However, it is a drawback of known approaches that some users do radio data collection more thoroughly and carefully than others. Further, some users participating in data collection may try to fool the system, e.g. by faking their location.

It is thus, inter alia, an object of the invention to achieve that reduces and/or avoids the known drawbacks of present approaches, and in particular enables to generate a radio map usable for indoor positioning based on trustworthy collected data.

According to a first exemplary aspect of the present invention, a method is disclosed, the method comprising:
- obtaining one or more pieces of fingerprint information at least indicative of one or more identifiers of one or more radio nodes;
- obtaining one or more pieces of metrics information, wherein each piece of metrics information of the one or more pieces of metrics information is at least indicative of a trustworthiness associated with a respective piece of fingerprint information of the one or more pieces of fingerprint information,
   wherein the respective piece of metrics information of the one or more pieces of metrics information is determined to comprise or represent a rank that is assigned to a collector that has gathered a respective piece of fingerprint information of the one or more pieces of fingerprint information;
- comparing one or more pieces of fingerprint information gathered by a respective collector to one or more pieces of fingerprint information gathered by one or more other collectors,
   wherein the rank of the respective collector is increased in case of one or more matches between the one or more pieces of fingerprint information, and wherein the rank of a respective collector is decreased in case of one or more mismatches between the compared one or more pieces of fingerprint information; and
- generating a radio map at least partially based on the one or more pieces of fingerprint information and the one or more pieces of metrics information, wherein the trustworthiness associated with the one or more pieces of fingerprint information determines whether or not a respective piece of fingerprint information of the one or more pieces of fingerprint information is used in the generating of the radio map.

This method may for instance be performed and/or controlled by an apparatus, for instance a server. Alternatively, this method may be performed and/or controlled by more than one apparatus, for instance a server cloud comprising at least two servers. For instance, the method may be performed and/or controlled by using at least one processor of the server or server cloud.

According to a further exemplary aspect of the invention, a computer program is disclosed, the computer program when executed by a processor causing an apparatus, for instance a server, to perform and/or control the actions of the method according to the first exemplary aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect of the invention, an apparatus is disclosed, configured to perform and/or control or comprising respective means for performing and/or controlling the method according to the first exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus, for instance the apparatus, at least to perform and/or to control the method according to the first exemplary aspect.

The above-disclosed apparatus according to any aspect of the invention may be a module or a component for a device, for example a chip. Alternatively, the disclosed apparatus according to any aspect of the invention may be a device, for instance a server or server cloud. The disclosed apparatus according to any aspect of the invention may comprise only the disclosed components, for instance means, processor, memory, or may further comprise one or more additional components.

According to a further exemplary aspect of the invention, a system is disclosed, comprising:
at least one apparatus according to any aspect of the present invention as disclosed above; and one or more mobile devices configured to gather one or more pieces of fingerprint information, wherein the one or more pieces of fingerprint information are sent to the at least one apparatus.

The one or more pieces of fingerprint information may for instance be provided (e.g. output, sent, etc.) from a respective mobile device to the at least one apparatus, so that the respective piece(s) of fingerprint information can be obtained (e.g. received) by the at least one apparatus.

In the following, exemplary features and exemplary embodiments of all aspects of the present invention will be described in further detail.

Indoor positioning and/or floor detection may for instance be performed and/or controlled based on a radio map of an area and/or an indoor radio map of a venue (e.g. a building). Such a radio map may for instance be stored in a memory. Such a radio map may for instance be provided (e.g. sent) to one or more other entities, e.g. one or more mobile devices. In this case, the radio map may for instance be provided as a service. Such a radio map may for instance be utilized for determining one or more location estimates, as disclosed in more detail below.

Such a radio map may be understood to represent an area of a pre-determined environment within which one or more radio nodes are expected to support e.g. one or more mobile devices to get their positions determined (e.g. estimated). Additionally or alternatively, the radio map may be defined by an environment and/or an area and/or a venue (or respectively a part of the environment, area and/or venue) within which the one or more radio nodes are capable to support e.g. mobile devices to determine (e.g. estimate) their positions.

The (e.g. expected) radio coverage associated with the one or more radio nodes may describe (e.g. define) the area within which a radio signal transmitted or triggered to be transmitted by the one or more radio nodes are (e.g. expected to be) observable (e.g. receivable with a minimum quality).

For instance, the radio map may contain or represent a respective radio coverage model for each radio node of the one or more radio nodes. Therein, a radio coverage model for a respective radio node may for instance be understood to represent the expected radio coverage associated with this radio node.

Based on the radio map, it may for instance be determined, whether certain identifiers or identifying information of the one or more radio nodes are expected to be observable. For instance, the radio map may comprise information indicative of any position within the coverage area covered by the radio map at which (e.g. different) signals or a number of different signals are expected to be observable. Such information may for instance be gathered (e.g. measured), e.g. by one or more mobile devices, and then a corresponding radio map comprising the gathered information may be generated.

The radio map may for instance be provided for use by one or more mobile devices to estimate their positions at least partially based on this radio map. A radio map may represent an estimate of a two-dimensional or a three-dimensional coverage map. It may describe (e.g. define) the expected radio coverage of a respective radio node of the one or more radio nodes within which one or more signals transmitted or triggered to be transmitted by the respective radio node (e.g. installed at an installation position) is expected to be observable. The real radio coverage of the radio node may however deviate from such an expected radio coverage.

A radio coverage model may be a hard-boundary or a soft-boundary model (e.g. a hard-boundary model or a soft-boundary model describing an expected radio coverage).

An example for a soft-boundary radio coverage model may be a parametric radio model. Data of such a parametric radio model may be considered to be data which enable determination of one or more characteristics of one or more signals transmitted or triggered to be transmitted by a respective radio node of the one or more radio nodes that are expected to be observable at different positions. Such data may for instance be gathered (e.g. measured) in the form of one or more pieces of fingerprint information. For example, data of such a parametric radio model may represent radio transmission parameters of the parametric radio model. Using radio transmission parameters of the parametric radio model may have the effect that the required amount of data for defining the one or more characteristics of one or more signals may be particularly small. An example of a parametric radio model is a path loss model for (radio) signals transmitted or triggered to be transmitted by a respective radio node of the one or more radio nodes. In this case, the radio transmission parameters may comprise a path loss exponent and an indication of a transmission power used by the transmitter of the respective radio node of the one or more radio nodes. Based on data of a parametric radio model an expected radio coverage of a respective radio node of the one or more radio nodes installed at a (potential) installation position may be determined.

Radio transmission parameters of a parametric radio model of a respective radio node of the one or more radio nodes may be at least partially determined (e.g. derived or selected or calculated) at least partially based on one or more observation reports. Further, such observation reports may for instance be comprised or represented by one or more pieces of fingerprint information. For example, the radio transmission parameters of a parametric radio model of a radio positioning support device may at least partially correspond to and/or determined based on one or more radio transmission parameters associated with this radio node of the one or more radio nodes, wherein the one or more radio transmission parameters associated with this radio node of the one or more radio nodes may for example be represented by and/or contained in the one or more observation reports (e.g. one or more observation reports associated with the radio node and/or an (e.g. adjacent) radio node of the one or more radio nodes).

In case different values are determined for a radio transmission parameter based on one or more radio transmission parameters represented by and/or contained in the one or more observation reports, a mean value (e.g. an arithmetic mean value or a median mean value) may for example be used as a value for this radio transmission parameter. Alternatively, one value of the different values may be selected according to a pre-determined rule to be used for as a value for this radio transmission parameter (e.g. the lowest or highest value may be used as value for this radio transmission parameter).

An indication of a transmission power of a radio node of the one or more radio nodes and an indication of one or more (received) signal strength values for a (radio) signal of one or more signals may be referred to as radio transmission parameters. A radio transmission parameter may be understood to be associated with a radio node of the one or more radio nodes if the radio transmission parameter describes a feature (e.g. a physical quantity) of a radio signal transmitted or triggered to be transmitted by this radio node, for example if the radio transmission parameter indicates a transmission power of this radio node and/or if the radio transmission parameter indicates a (received) signal strength value for a signal transmitted or triggered to be transmitted by this radio node of the one or more radio nodes.

If the installation positions of the one or more radio nodes and, thus, also the distances between the one or more radio nodes are known, such radio transmission parameters associated with a radio node of the one or more radio nodes may for example be used to determine (e.g. calculate) further radio transmission parameters for a parametric radio model like e.g. a path loss exponent

An example for a hard-boundary radio coverage model may be a geometric model. Data of such a geometric radio model may be considered to be data which (e.g. geometrically) describe (e.g. define) an expected radio coverage of a radio node of the one or more radio nodes (e.g. installed at an installation position). Such data may for instance be gathered (e.g. measured) in the form of one or more pieces of fingerprint information.

For instance, a terrestrial transmitter (e.g. comprised by or represented by a radio node of the one or more radio nodes) based positioning at a particular site (e.g. in the venue) may be based on one or more radio maps, which allow determining for instance which received signal strength values of which transmitters can be expected at various locations of the particular site.

For making use of a positioning service, an apparatus (e.g. a mobile device) may detect signals sent by a plurality of radio nodes and gather (e.g. measure) their respective signal strengths. The apparatus may transmit the results of the measurements (e.g. in the form of a fingerprint information) along with identifiers/identifying information of the respective radio nodes to another apparatus, e.g. a radio map and positioning server, such as the apparatus performing and/or controlling the method according to the first exemplary aspect of the present invention. Such an identifier may be for instance in the form of a service set identifier (SSID), and the results of measurements may be for instance in the form of a received signal strength indicator (RSSI). The radio map and positioning server may determine (e.g. analyze or evaluate) the signals taking account of data stored in the one or more radio maps and returns a position (e.g. in the form of coordinates) that are consistent with the measured signal strengths of the plurality of radio nodes.

The one or more radio nodes may for instance be comprised by an area and/or a venue, e.g. by an infrastructure of the venue, or a part of it Such a radio node of the one or more radio nodes may for instance be a radio node, e.g. of the area and/or venue. Such a radio node may for instance be used for indoor positioning and/or floor detection, e.g. according to BT- (Bluetooth) and/or BLE- (Bluetooth Low Energy) specification, or may for instance be a Wi-Fi Access Point for indoor positioning and/or floor detection, e.g. according to the WLAN- (Wireless Local Area Network) specification, to name but a few non-limiting examples.

Such a radio node (e.g. WiFi access point, beacon device, or a combination thereof, to name but a few non-limiting examples) of the one or more radio nodes, e.g. of the area and/or venue, may for instance comprise or be connectable to a transceiver, e.g. according to the BT-, BLE, and/or WLAN-specification to provide wireless-based communication. Each radio node of the one or more radio nodes, e.g. of the area and/or venue, may for instance use such a transceiver for transmitting and/or broadcasting one or more signals, e.g. comprising one or more information (e.g. one or more identifiers), such as a SSID of the respective radio node of the one or more radio nodes.

The venue may for instance be a building, shopping mall, office complex, public accessible location (e.g. station, airport, university or the like), to name but a few non-limiting examples. The area may for instance be a public place, urban area, rural area, industrial area, or a combination thereof, to name but a few non-limiting examples.

One or more signals sent by a respective radio node of the one or more radio nodes may for instance be observable at a certain location within the area and/or venue. Such one or more signals may for instance be observable and/or receivable by one or more mobile devices, e.g. located within the vicinity of the respective radio node of the one or more radio nodes. Additionally or alternatively, a respective signal strength (e.g. received signal strength value, e.g. RSSi) may for instance be gathered (e.g. measured) at a certain location within the area and/or venue.

An identifier/identifying information of a respective radio node of the one or more radio nodes may for instance enable to (uniquely) identify one specific radio node of the one or more radio node. Such one or more identifiers may for instance be determined, e.g. by receiving the respective identifiers from the respective radio node. Additionally or alternatively, the one or more identifiers may for instance be determined, e.g. by extracting the one or more identifiers out of respective received one or more signals (that were sent by the one or more radio nodes).

One or more signal strength values observable at a certain location within or in the vicinity of the area and/or venue may for instance be determined, e.g. by measuring the one or more signal strength values based on sent signals of the one or more radio nodes. The one or more signal strength values may for instance be measured by a respective mobile device. One of the one or more signal strength values may for instance be represented by a received signal strength value (RSS). Such a received signal strength value may for instance represent the power of a received radio positioning support signal, wherein such a radio positioning support signal may for instance be sent (e.g. periodically) from each radio node of the one or more radio nodes. An example of a received signal strength parameter is a received signal strength indicator (RSSI) or a representation of a physical receiving power level value (e.g. a Rx power level value) in dBm.

The mobile device may for instance be portable (e.g. weigh less than 1, 0.5, 0.4, 0.2, or 0.1 kg). The mobile device may for instance be a smartphone, tablet, wearable, IoT (Internet-of-Things) device, portable navigation device, or a combination thereof, to name but a few non-limiting examples. The mobile device may for instance comprise or be connectable to one or more sensors for determining the devices position, such as for instance a magnetic field receiver, to name but a few non-limiting examples. The mobile device may for instance comprise or be connectable to one or more sensors, e.g. in the form of an inertial sensor, an accelerometer and/or a gyroscope, and/or a barometer for gathering (e.g. measuring) information enabling to support the determining of a location estimation of the device (e.g. in conjunction with one or more radio measurements). The mobile device may for instance comprise or be connectable to a receiver and/or a transmitter (e.g. a transceiver) for receiving and/or sending data and/or information, and/or for gathering (e.g. measuring) one or more pieces of fingerprint information, e.g. by measuring receivable signal strength of signals sent by one or more radio nodes. For instance, the mobile device may comprise one or more radio receivers (e.g. radio transceivers, e.g. cellular radio transceivers). The mobile device may for instance be suitable for outdoor and/or indoor navigation respectively positioning. The mobile device may for instance comprise or be connectable to means for storing information, e.g. a memory for storing one or more pieces of fingerprint information, one or more radio maps, to name but a few non-limiting examples.

The one or more pieces of fingerprint information may for instance be obtained, e.g. by receiving the one or more pieces of fingerprint information from an entity that is different from the apparatus performing and/or controlling the method according to the first exemplary aspect of the present invention. Additionally or alternatively, the one or more pieces of fingerprint information may for instance be obtained, e.g. by retrieving (e.g. extracting) the one or more pieces of fingerprint information out of a memory. Such a memory may for instance be represented by a database. Such a memory may for instance be comprised by or connectable to the apparatus performing and/or controlling the method according to the first exemplary aspect of the present invention. In case such one or more pieces of fingerprint information have been retrieved from such a memory, the one or more pieces of fingerprint information may for instance be stored, e.g. in a memory (e.g. a database), e.g. that is comprised by or connectable to the apparatus performing and/or controlling the method according to the first exemplary aspect of the present invention.

Additionally or alternatively, the one or more pieces of fingerprint information may for instance be obtained, e.g. by extracting the one or more pieces of fingerprint information out of one or more existent information, such as previously obtained one or more pieces of fingerprint information, e.g. stored for a specific area and/or venue, to name but a few non-limiting examples.

Prior to the obtaining of the one or more pieces of fingerprint information, the one or more pieces of fingerprint information may for instance be gathered (e.g. measured), e.g. in a manual fashion, or manually. For instance, a collector/user of a mobile device may for instance be located within the area and/or venue. Then, at one or more (e.g. certain) locations within the area and/or venue, the collector/user of the respective mobile device may for instance gather (e.g. measure) - e.g. as a result of a user input in a respective mobile device - one or more pieces of fingerprint information. Such a respective piece of fingerprint information of the one or more pieces of fingerprint information may for instance be indicative of at least one identifier of a radio node which signals are observable at the location at which the respective fingerprint information is gathered (e.g. measured). It will be understood that a respective piece of fingerprint information may for instance be in the form of observation reports, and/or comprise or represent data of a parametric radio model, and/or data of a geometric radio model, as disclosed above, to name but a few non-limiting examples. Further, a respective piece of fingerprint information of the one or more pieces of fingerprint information may for instance be indicative of one or more received signal strength values, e.g. measured at least partially based on signals sent by one or more radio nodes, and wherein the signals are observable at the location at which the one or more received signal strength values are gathered (e.g. measured) by the respective collector/user respectively his mobile device.

The one or more pieces of metrics information may for instance be obtained, e.g. by receiving the one or more pieces of metrics information from an entity that is different from the apparatus performing and/or controlling the method according to the first exemplary aspect of the present invention. Additionally or alternatively, the one or more pieces of metrics information may for instance be obtained, e.g. by retrieving (e.g. extracting) the one or more pieces of metrics information out of a memory. Such a memory may for instance be represented by a database. Such a memory may for instance be comprised by or connectable to the apparatus performing and/or controlling the method according to the first exemplary aspect of the present invention. In case such one or more pieces of metrics information have been retrieved from such a memory, the one or more pieces of metrics information may for instance be stored, e.g. in a memory (e.g. a database), e.g. that is comprised by or connectable to the apparatus performing and/or controlling the method according to the first exemplary aspect of the present invention. Then, the one or more pieces of metrics information may for instance be obtained, e.g. by retrieving the one or more pieces of metrics information from the memory. Additionally or alternatively, the one or more pieces of metrics information may for instance be obtained, e.g. by retrieving (e.g. extracting) the one or more pieces of metrics information from one or more third parties, such as e.g. accessible via the Internet, to name but one non-limiting example.

Additionally or alternatively, the obtaining of the one or more pieces of metrics information may for instance be based on an identifier indicative of a collector/user that has gathered the one or more pieces of fingerprint information, or a part of it. Such an identifier may for instance be represented by e.g. a mobile device identifier, a MSISDN (Mobile Subscriber Integrated Services Digital Network Number), a MAC (Medium Access Control) address, or the like, to name but a few non-limiting examples. For instance, such an identifier may be comprised or represented by a respective fingerprint information, or a part of it, of the (obtained) one or more pieces of fingerprint information. It will be understood that it order to enable the above disclosed feature of the example embodiment, the one or more pieces of fingerprint information may for instance be obtained prior to the obtaining of the one or more pieces of metrics information.

Each piece of metrics information of the one or more pieces of metrics information is at least indicative of a trustworthiness associated with a respective piece of fingerprint information of the one or more pieces of fingerprint information. In case there does not exist a trustworthiness associated with a respective piece of fingerprint information of the one or more pieces of fingerprint information, then in an optional step, a respective metrics information may for instance be determined (e.g. a trustworthiness may for instance be determined). Further, each piece of metrics information of the one or more pieces of metrics information may for instance be indicative of a rank assigned to a certain collector/user. The collector/user may for instance be (uniquely) identifiable based on an identifier, e.g. comprised or represented by a respective piece of fingerprint information of the one or more pieces of fingerprint information. For instance, such a rank may for instance represent a relation of one certain collector/user to another. A higher ranked collector/user may for instance be considered to be more trustworthy than a lower ranked collector/user. Further, a threshold may for instance be pre-defined. For instance, all of the collectors/users ranked below or equal to the pre-defined threshold may for instance be considered to be not trustworthy at all. In this case, e.g. one or more pieces of fingerprint information stemming from the collector(s)/user(s) below or equal to the pre-defined threshold may for instance be not used for generating the radio map. Thus, the radio map may for instance not be generated (e.g. created) based on the respective piece(s) from such collector(s)/user(s).

For instance, one respective piece of metrics information of the one or more pieces of metrics information may for instance be associated with one certain collector/user, to name but one non-limiting example. Thus, each respective piece of metrics information of the one or more pieces of metrics information may for instance represent a trustworthiness of the respective collector/user with which it is associated.

The trustworthiness, as used herein, may for instance be understood that one or more pieces of fingerprint information gathered (e.g. measured, or collected) by a certain collector/user, respectively a mobile device used for the respective gathering, is considered to be not fraudulent (e.g. faked, or falsified, to name but a few non-limiting examples). Then, in case only one or more pieces of fingerprint information that are considered to be trustworthy are used for generating (e.g. creating) the radio map since the generating of the radio map is based on the one or more pieces of fingerprint information and the one or more pieces of metrics information. In case no pieces of metrics information are obtainable, the generating of the radio map may for instance not be performed and/or controlled. In this way, it is ensured that a radio map generated (e.g. created) in particular based on one or more pieces of fingerprint information gathered by a plurality of different collectors/users considered to be trustworthy which enables a certain accuracy of a positioning to be performed and/or controlled based on the respective radio map. Further, in this way, it is ensured that a radio map which is in particular to be generated (e.g. created) based on one or more pieces of fingerprint information gathered by a plurality of different collectors/users, is considered to be trustworthy. This enables a certain availability of a positioning performed and/or controlled based on the respective generated radio map, since a certain quality of pieces of fingerprint information used for the generated is determined to be present.

The radio map is generated (e.g. created) at least partially based on the (obtained) one or more pieces of fingerprint information and the (obtained) one or more pieces of metrics information, wherein the trustworthiness associated with the one or more pieces of fingerprint information determines whether or not a respective piece of fingerprint information of the one or more pieces of fingerprint information is used in the generating of the radio map.

The respective piece of metrics information of the one or more pieces of metrics information is determined to comprise or represent a rank that is assigned to a collector that has gathered a respective piece of fingerprint information of the one or more pieces of fingerprint information

A rank of a certain collector/user may for instance be part of a ranking comprising a plurality of collectors/users. A respective collector/user may for instance be represented by an identifier. The ranking may for instance be based on a history of provided (e.g. by sending them from a respective mobile device), and thus obtained according to the method of the first exemplary aspect of the present invention, one or more pieces of fingerprint information. The ranking may for instance be based on the whole history of the obtained one or more pieces of fingerprint information, or e.g. of one or more pieces of fingerprint information that were obtained (e.g. received) during the last few months, e.g. last 6, 5, 4, 3, 2, 1, or less months to name but a few non-limiting examples. For instance, one or more pieces of fingerprint information obtained from a 'new' collector/user (e.g. a respective piece of metrics information is not available) may for instance not be considered when generating a/the radio map. In this way, e.g. a respective collector/user may for instance contribute data (e.g. in the form of one or more pieces of fingerprint information) for some time first after which a rank is assigned to the respective collector/user, which may for instance then be represented by a respective piece of metrics information associated with the respective collector/user.

One or more pieces of fingerprint information obtained from a high-ranking collector/user may for instance be considered certain or of high confidence (e.g. low covariance) in the generating of the radio map. For instance, one or more pieces of fingerprint information obtained from a high-ranking collector/user may for instance be directly used in the generating of the radio map without requiring e.g. a verification. Such a verification may for instance be at least partially based on a comparison of one or more pieces of fingerprint information obtained from a certain collector/user to one or more (further) pieces of fingerprint information (e.g. gathered at the same area and/or venue) from one or more other collectors/users which may for instance be high(er)-ranking collectors/users than the certain collector/user.

In contrast, one or more pieces of fingerprint information obtained from a low-ranking collector/user may for instance be considered to need a verification, e.g. by a comparison of the one or more pieces of fingerprint information obtained from the low-ranking certain collector/user to one or more (further) pieces of fingerprint information (e.g. gathered at the same area and/or venue) from one or more other collectors/users which may for instance be suitably high(er)-ranking collectors/users. This may for instance be pre-defined by a threshold. The suitably high (er)-ranking collectors/users may for instance be ranked higher than the pre-defined threshold. Such a result of the verification may for instance be comprised or represented by a respective metrics information of the one or more pieces of metrics information.

Further, in case of a conflict of one or more pieces of fingerprint information not matching to one or more further pieces of fingerprint information gathered at the same or within the vicinity of a certain location within the area and/or venue, the respective piece(s) of fingerprint information stemming from the higher-ranked collector/user may for instance override the conflicting piece(s) of fingerprint information.

According to an exemplary embodiment of all exemplary aspects of the present invention, the method further comprises:
- determining a respective piece of metrics information at least partially based on one or more parameters affecting the rank of a collector of a respective piece of fingerprint information of the one or more pieces of fingerprint information; and
- storing the respective piece of metrics information.

In case there does not exist a trustworthiness (or a trustworthiness being represented by a respective piece of metrics information) associated with a respective piece of fingerprint information of the one or more pieces of fingerprint information, then in an optional step, a respective metrics information may for instance be determined (e.g. a trustworthiness may for instance be determined).

The one or more pieces of metrics information may for instance represent or comprise one or more factors, variables, parameters, or a combination thereof, to name but a few non-limiting examples. For instance, a respective piece of metrics information may for instance be determined based on one or more of the following:
i) Density and/or coverage represented by the one or more pieces of fingerprint information;
ii) Availability and/or quality of the radio environment in the area and/or venue as represented by the one or more pieces of fingerprint information;
iii) Verification and/or validation of the one or more pieces of fingerprint information; e.g. comprising one or more of the following:
   a. Matching between manually input reference location comprised or represented by a respective piece of fingerprint information and a (e.g. coarse) location estimate determined based on the respective piece of fingerprint information;
   b. Matching between input by collector/user comprised or represented by a respective piece of fingerprint information and sensor information gathered by one or more sensors (e.g. inertial sensor, barometer, to name but a few non-limiting examples) comprised by or connectable to a respective mobile device that gathered the respective piece of fingerprint information; and
iv) Feedback information from positioning users that have determined or requested to get a location estimate indicative of their respective position in an area and/or venue covered by a radio map that was generated based on a respective piece of fingerprint information from a certain collector/user of the respective piece of metrics information that is to be determined.

For instance, one or more of the following details may be present in the above disclosed factors, variables, and/or parameters i) to iv).

### i) Density and coverage of radio data collection (e.g. in the form of one or more pieces of fingerprint information):

One or more pieces of fingerprint information may for instance be analyzed prior to the generating of a radio map. When analyzing such radio data e.g. from a single collector/user, the *density* of gathered (e.g. measured) respectively collected data (density of radio samples (e.g. represented by the one or more pieces of fingerprint information), wherein a radio sample may for instance be indicative of a pair, such as {location, radio measurements}. Such a density may for instance be considered to be a key metric. Density, as used herein, may for instance be understood as how much data the collector has, on average collected, e.g. per unit area. *Coverage* on the other hand, as used herein, may for instance be understood that coverage measures that the radio data respectively a respective piece of fingerprint information has been collected throughout the area/venue. Density may for instance be considered to contribute to the accuracy of positioning seen by service end users, while coverage may for instance be considered to contribute to the availability of positioning experienced by such service end users.

It is possible to achieve high average data density by collecting lots of data respectively pieces of fingerprint information in a small area/venue (e.g. lots of radio samples per unit area). However, to be useful the gathering of one or more pieces of fingerprint information needs to be performed in the whole area and/or venue. Thus, also coverage is examined. Further, such two metrics may for instance be combined by analyzing (e.g. calculating or examining) density not on the area and/or venue (e.g. building) level, but e.g. in many small cells separately.

### ii) Availability and quality of the radio environment in the area and/or venue:

For instance, a good collector/user may be defined as follows: a good collector/user assesses if the area and/or venue (e.g. building) has adequate radio signal environment (e.g. a respective metrics information may for instance comprise or represent: number of unique radio nodes, signal strength of radio nodes, signal strength variability/variance over the venue/area) and e.g. not collect data (e.g. in the form of one or more pieces of fingerprint information) in case the signal environment is inadequate for high quality positioning. The method according to the first exemplary aspect of the present invention and/or the gathering of the one or more pieces of fingerprint information performed by a respective mobile device (e.g. radio data collection) may for instance analyze the radio signals and indicate the quality, e.g. in the UI (User Interface), if available. On the other hand, a careless radio data collector might not care about this and gather one or more pieces of fingerprint information (e.g. collect radio data) regardless of such an indication. Thus, the radio signal diversity directly contributes to the accuracy of positioning seen by the service end users.

### iii) Verification and/or validation of the one or more pieces of fingerprint information:

To verify and/or validate obtained one or more pieces of fingerprint information (e.g. radio data coming (e.g. obtained or received, or originating)) from a plurality of users, data sets (e.g. in the form of the one or more pieces of obtained fingerprint information) may for instance be needed to be compared. For instance, if the respective piece(s) of fingerprint information match between more than one (e.g. at least two, or a plurality of) collectors/users, gathered (e.g. collected) respective pieces of fingerprint information can be considered to be of high quality resulting in higher rank for all the collectors given that other criteria are fulfilled.

However, if e.g. radio data of one of the collectors/users does not match with the radio data collected by others, then the rank of the collector/user contributing differing data respectively fingerprint information may for instance be reduced.

iii.a) Further, it may for instance be determined (e.g. analyzed) whether manually input reference locations correspond to the coarse location estimates made by the respective mobile device using GNSS (Global Navigation Satellite System), Wi-Fi and/or cellular signals. If a distance between collector/user-indicated locations and locations estimated by the respective mobile device (that gathered the one or more pieces of fingerprint information), or determined based on a fingerprint information gathered by the respective mobile device, at the same time is larger than e.g. a pre-defined threshold, it may for instance be considered that this is an indication that the user/collector is trying fake its location. In case the collector/user tries to fake its position, the collector shall be assigned low rank (e.g. immediately).

iii.b). If the collection device (e.g. a respective mobile device) comprises e.g. inertial sensor(s) and/or barometer(s), e.g. the respective mobile device (e.g. collection client), or the apparatus performing and/or controlling the method according to the first exemplary aspect of the present invention may for instance check if a track shape indicated by the collector/user and another track shape indicated by the sensor(s) of the respective mobile device match. If they match, e.g. the respective mobile device may for instance indicate(e.g. transmit a respective message) this to a backend (e.g. the apparatus (e.g. server) performing and/or controlling the method according to the first exemplary aspect of the present invention), which can then increase the collector/user rank and otherwise decrease it. Specifically, if the collector/user indicates varying locations but the sensor(s) respectively the information gathered by the sensor(s) indicate that the respective mobile device is stationary, the collector/user rank may for instance be reduced.

### iv) Negative feedback from positioning user:

The positioning users using the generated radio map according to the method of the first exemplary aspect of the present invention may for instance be provided with an interface to give feedback regarding the (achieved) positioning performance. The rank of a collector/user may for instance be lowered when there is negative feedback in an area and/or venue radio mapped by a certain collector/user.

One or more respective pieces of metrics information determined as disclosed above may for instance be stored, e.g. in a memory that is comprised by or connectable to the apparatus performing and/or controlling the method according to the first exemplary aspect of the present invention. From the memory (e.g. a database), e.g. in case of another iteration of the method according to the first exemplary aspect of the present invention, the respective piece(s) of metrics information may for instance be obtained, e.g. by retrieving the respective piece(s) of metrics information from the memory.

According to an exemplary embodiment of all exemplary aspects of the present invention, a low rank of a collector assigned to a respective piece of fingerprint information of the one or more pieces of fingerprint information results in that the respective piece of fingerprint information is not utilized in the generating of the radio map.

According to an exemplary embodiment of all exemplary aspects of the present invention, the method further comprises:
- blocking the obtaining of one or more pieces of fingerprint information stemming from one or more certain collectors in case one or more ranks assigned to the one or more certain collectors is below a pre-defined threshold value.

If the collector/user rank stays below a (e.g. pre-defined) threshold for some period (e.g. of time), the collector/user may for instance be blocked from contributing one or more pieces of fingerprint information. Such low ranking collectors/users may also be notified/warned that unless they start to follow e.g. guidelines/instructions, they will be blocked.

For instance, if a rank assigned to a collector/user stays below the pre-defined threshold for some (e.g. pre-defined) period, or was not updated for some other (e.g. pre-defined) period, the collector may for instance be blocked from contributing one or more pieces of fingerprint information utilized by the method according to the first exemplary aspect of the present invention.

According to an exemplary embodiment of all exemplary aspects of the present invention, the method further comprises:
- increasing or decreasing a respective rank of a collector at least partially based on the determined one or more pieces of metrics information, wherein at least a part of the one or more pieces of metrics information is indicative of a performance of the respective collector, wherein the radio map is generated further based on the performance of a respective collector.

For instance, in case it is determined and then comprised or represented by a respective piece of metrics information, or the respective piece of metrics information indicates that a collector/user performs respectively has performed well, the rank of the respective collector/user may for instance be increased (e.g. set to 'high'), or vice versa (e.g. set to 'low'). This may for instance be performed and/or controlled by updating a respective piece of metrics information, e.g. that is already stored in the memory (e.g. a database).

The increasing or decreasing of a respective rank of a collector is performed and/or controlled by comparing one or more pieces of fingerprint information gathered by a respective collector/user to one or more (further or other) pieces of fingerprint information gathered by one or more other collectors/users, wherein the rank of a respective collector is increased in case of one or more matches, and wherein the rank of a respective collector is decreased in case of one or more mismatches between the one or more pieces of fingerprint information.

According to an exemplary embodiment of all exemplary aspects of the present invention, at least a part of a respective piece of fingerprint information of the one or more pieces of fingerprint information is indicative of a pair comprising a location and one or more radio measurements, wherein a respective piece of metrics information is determined by analyzing a density

For instance, a density of one or more locations at which the one or more pieces of fingerprint information were gathered may for instance be represented by the obtained one or more pieces of fingerprint information. Further, it may for instance be analyzed whether one or more locations as represented by one or more pieces of fingerprint information are distributed (e.g. evenly) throughout the area and/or venue. Additionally or alternatively, one or more respective pieces of fingerprint information may for instance be analyzed with regard to the respective locations at which they were gathered, and it may for instance be analyzed whether at comparable (e.g. same) locations comparable (e.g. same) radio measurements were gathered (e.g. same one or more radio nodes were observable, to name but one non-limiting example).

Based on such an analyzing, in case of conflicting (e.g. not matching as disclosed above) pieces of fingerprint information, one or more respective pieces of fingerprint information stemming from a higher-ranking collector may for instance override one or more conflicting pieces of fingerprint information from a lower-ranking collector.

According to an exemplary embodiment of all exemplary aspects of the present invention, a respective piece of metrics information is determined by analyzing a coverage (e.g. of the radio signals of the one or more pieces of fingerprint information that were gathered) of one or more respective pieces of fingerprint information.

For instance, the coverage may for instance be determined by analyzing whether or not the respective locations of the one or more pieces of fingerprint information are distributed throughout an/the area and/or venue.

This may for instance be performed and/or controlled in addition or in alternative to the exemplary embodiment in that a respective piece of metrics information is determined by analyzing a density (disclosed above).

According to an exemplary embodiment of all exemplary aspects of the present invention, the determining of a respective piece of metrics information is further based on analyzing a number of unique radio nodes, signal strength of radio nodes, and/or signal strength variability (e.g. also referred to as variance (e.g. over an area and/or venue).

Methods to compare obtained one or more pieces of fingerprint information, wherein one or more respective pieces of fingerprint information stemming from one certain collector/user may for instance be considered to form a set. Such sets may for instance comprise or include:
- number and identities/identifiers of the radio nodes (Wi-Fi and/or Bluetooth) in the venue (e.g. building) and/or area; and/or
- measured received signal strength values (e.g. signal levels) of signals sent by one or more radio nodes at multiple locations in the venue (e.g. building) and/or area.

Majority voting may for instance be used to select 'reference radio data' respectively 'reference' piece(s) of fingerprint information to which every collector's/user's data respectively piece(s) of fingerprint information is compared to.

According to an exemplary embodiment of all exemplary aspects of the present invention, a respective piece of fingerprint information of the one or more pieces of fingerprint information is further indicative of one or more pieces of gathered information from one or more sensors, wherein the one or more pieces of metrics information are further determined based on a comparison of the one or more pieces of gathered information from the one or more sensors and one or more input information from a respective collector.

The one or more sensors may for instance be comprised by or connectable to a respective mobile device that a respective collector has used for gathering one or more pieces of fingerprint information.

The one or more input information may for instance be gathered by user input a respective collector/user has entered into his respective mobile device, e.g. via a keypad, or touchscreen, or a combination thereof, to name but a few non-limiting examples.

According to an exemplary embodiment of all exemplary aspects of the present invention, a respective piece of fingerprint information is further indicative of a timestamp information indicative of a date and/or time at which the respective piece of fingerprint information was gathered, wherein the generating of the radio map is further based on the respective timestamp information.

For instance, one or more pieces of fingerprint information from a 'new' collector/user - thus a collector/user which has not a respective piece of metrics information associated with him - may for instance not be included in a generated radio map, to make up time until a reliable rank may for instance be assigned to the respective collector/user. This may for instance enhance reliability in one or more pieces of fingerprint information gathered by a/the respective collector.

According to an exemplary embodiment of all exemplary aspects of the present invention, the method further comprises:
- providing the radio map.

The radio map may for instance be provided, e.g. by sending the radio map to one or more mobile device, or to another entity that is different from the one or more mobile device, which may for instance relay the radio map to the one or more mobile devices. The radio map that is provided may for instance be the radio map stored in the memory comprised by or connectable to the apparatus performing and/or controlling the method according to the first exemplary aspect of the present invention. By providing the radio map, a positioning may for instance be enabled. For instance, the apparatus performing and/or controlling the method according to the first exemplary aspect of the present invention may for instance be an indoor positioning server or server cloud enabling one or more location-based services, to name but a few non-limiting examples. For instance, based on a request, e.g. comprising or being accompanied by a fingerprint information, the apparatus performing and/or controlling the method according to the first exemplary aspect of the present invention may for instance be enabled to determine a location estimate indicative of an estimation of the position at which the respective mobile device, from which the request was received, has gathered the fingerprint information that was comprised by the request.

The features and example embodiments of the invention described above may equally pertain to the different aspects according to the present invention.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a schematic block diagram of a system according to an exemplary aspect of the present invention;
- Fig. 2: a flowchart showing an example embodiment of a method according to the first exemplary aspect of the present invention;
- Fig. 3a-c: respective flowcharts showing respective example embodiment that can be performed and/or controlled in conjunction with a method according to the first exemplary aspect of the present invention; and
- Fig. 4: a schematic block diagram of an apparatus configured to perform the method according to the first exemplary aspect of the present invention.

### DETAILED DESCRIPTION OF SOME EXEMPLARY EMBODIMENTS

The following description serves to deepen the understanding of the present invention and shall be understood to complement and be read together with the description as provided in the above summary section of this specification.

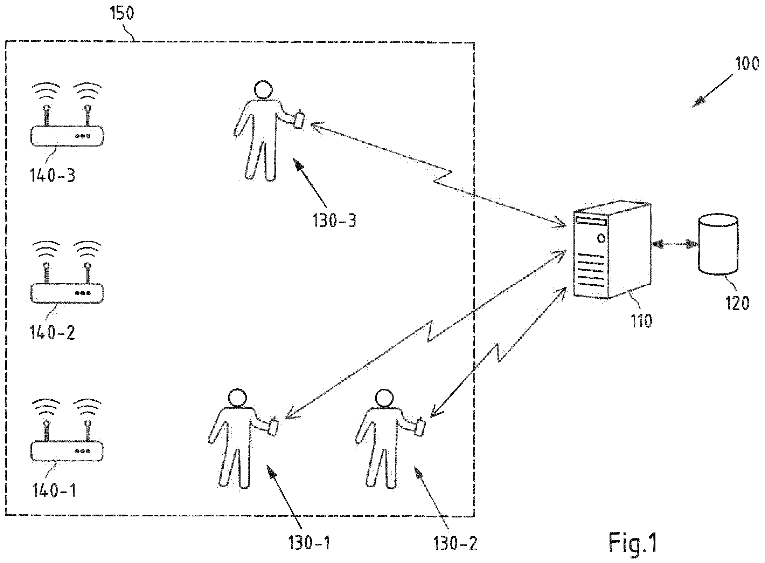

Fig. 1 is a schematic high-level block diagram of a system 100 according to an exemplary aspect of the present invention. Such a system 100 may for instance represent a generic system architecture which may for instance be utilized by example embodiments of the present invention.

System 100 comprises a server 110, an optional database 120, one or more radio nodes (e.g. WiFi access points) 140, and one or more mobile devices 130, from which three examples of smartphones that are carried by collectors/users are shown.

The one or more radio nodes 140 are located within a venue 150. The venue 150 may for instance be a building, such as an office building, shopping mall, airport, station, or the like, to name but a few non-limiting examples. Alternatively or additionally, e.g. instead of a venue 150, example embodiments according to all aspects of the present invention may for instance use an area (e.g. urban, rural, industrial area, public places or squares, to name but a few non-limiting examples).

As disclosed above, the mobile device(s) 130 may for instance be embodied as a smartphone, tablet, wearable, portable navigation device, loT (Internet-of-Things) device, or may be comprised, be a part of, or be embedded into a vehicle, to name but a few non-limiting examples.

The server 110 may for instance be embodied as a server cloud (e.g. a plurality of servers connected, e.g. via the Internet and providing one or more services at least partially jointly). The server 110, the mobile device(s) 130 and/or the radio node(s) 140 may for instance be connected, e.g. via a communication network (e.g. cellular communication network, wireless or wirebound communication network) e.g. to each other.

The optional database 120 may for instance be comprised by or be connectable to the server 110. The optional database 120 may for instance comprise a memory, e.g. for storing one or more pieces of fingerprint information, one or more pieces of metrics information, one or more radio maps, one or more ranks of one or more collectors/users, or the like, to name but a few non-limiting examples.

The server 110 may for instance be configured to perform and/or control the method according to the first exemplary aspect of the present invention.

Such mentioned Wi-Fi crowdsourcing (which gathers also identifying information (e.g. SSIDs of radio nodes (e.g. WiFi access points)) may for instance take place automatically when a collector/user (e.g. users/collectors 130) walks around the venue 150.

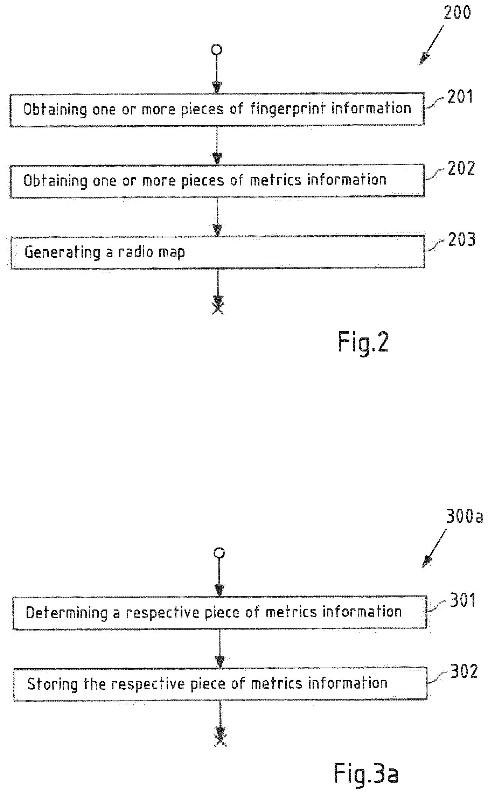

The system 100 may for instance enable a method according to all exemplary aspects of the present invention, e.g. enabling to rank radio data collectors (= persons performing radio data collection, such as users/collectors 130) based on various criterion respectively pieces of metrics information, wherein if one or more pieces of metrics information indicate that a user/collector performs well, the user's/collector's rank may for instance be increased or set high, and/or may for instance be lowered or set low, e.g. for users/collectors contributing bad or suspicious radio data (e.g. in the form of one or more pieces of fingerprint information). For instance, such a rank may affect how trustworthy the respective user's/collector's radio data (e.g. one or more pieces of fingerprint information) is in the radio map generation (e.g. see step 203 of Fig. 2), and/or wherein a low rank may result in blocking the user/collector from contributing (e.g. further) radio data (e.g. one or more (e.g. further) pieces of fingerprint information).

Collector/user ranking may for instance be based on the whole collection history of e.g. last few months. One option may for instance be to not start using a new collector's radio data immediately in the generating (e.g. production) of one or more radio maps, but to let the collector/user contribute data for some time first after which the rank is assigned.

Radio data from a high-ranking collector/user may be considered certain or of high confidence (e.g. low covariance) in the radio map generation. This may e.g. mean that radio data (e.g. one or more pieces of fingerprint information) gathered (e.g. collected) by a high-ranking collector may for instance be directly used in the generating (e.g. production) of one or more radio maps e.g. even without requiring data from another collector to verify the data. In contrast, radio data collected by a low-ranking collector may always need a verification by a suitably high-ranking collector, before the data as represented by the one or more pieces of fingerprint information that were obtained is taken into use in the generating of one or more radio maps.

In case of a conflict, data (e.g. one or more pieces of fingerprint information) obtained (e.g. received) from a higher-ranking collector/user may for instance override conflicting data (e.g. one or more (e.g. further) pieces of fingerprint information) obtained (e.g. received) from a lower-ranking collector.

The proposed solution enables, among other things, a safe use of a large crowd for manual radio data collection.

Fig. 2 is a flowchart 200 showing an example embodiment of a method according to the first exemplary aspect of the present invention. This flowchart 200 may for instance be performed by a server, e.g. server 110 of Fig. 1.

In a first step 201, one or more pieces of fingerprint information are obtained. The one or more pieces of fingerprint information may for instance be obtained, e.g. by receiving the one or more pieces of fingerprint information from one or more mobile devices (e.g. mobile device(s) 130 of Fig. 1). The one or more pieces of fingerprint information may for instance be gathered (e.g. measured), e.g. by the one or more mobile devices prior to the obtaining. Then, the one or more mobile devices may for instance transmit (e.g. sent) the one or more pieces of fingerprint information so that the one or more pieces of fingerprint information can be obtained (e.g. received), e.g. by a server (e.g. server 110 of Fig. 1) or server cloud.

In a second step 202, one or more pieces of metrics information are obtained. The one or more pieces of metrics information may for instance be obtained, e.g. by retrieving the one or more pieces of metrics information, e.g. out of a database (e.g. database 120 of Fig. 1), or from a memory (e.g. a memory comprised by the apparatus performing and/or controlling the flowchart 200, such as server 110 of Fig. 1. Additionally or alternatively, the one or more pieces of metrics information may for instance be obtained, e.g. by receiving the one or more pieces of metrics information from an entity that is different from the apparatus performing and/or controlling the flowchart 200, e.g. another server or server cloud (not shown in Fig. 1). The one or more pieces of metrics information may for instance be obtained at least partially based on an identifier comprised or represented or associated with (e.g. linked to) a respective piece of fingerprint information so that the respective piece(s) of metrics information e.g. associated with (a) respective piece(s) of fingerprint information obtained in step 201 may for instance be indicative of a trustworthiness of a collector/user that has gathered (e.g. measured) the respective piece(s) of fingerprint information with his respective mobile device (e.g. one of the mobile devices 130 of Fig. 1). Thus, the identifier may for instance enable identifying the respective collector/user and/or the respective mobile device the collector/user has used for gathering the respective piece(s) of fingerprint information.

In a third step 203, a radio map is generated at least partially based on the one or more pieces of fingerprint information of step 201, and on the one or more pieces of metrics information of step 202. It will be understood that not all of the obtained one or more pieces of fingerprint information and/or of the obtained one or more pieces of metrics information may for instance be used in the generating of the radio map. Further, it will be understood that not all of the information and/or data comprised or represented by the obtained one or more pieces of fingerprint information and/or of the obtained one or more pieces of metrics information may for instance be used in the generating of the radio map. In this way, it is enabled that e.g. based on a trustworthiness e.g. associated with one or more respective collectors/users respectively one or more mobile devices used for gathering the one or more pieces of fingerprint information the radio map is generated. Thus, in case of a low trustworthiness, such one or more pieces of fingerprint information (e.g. a part of all of the obtained one or more pieces of fingerprint information) may for instance not be used for generating the radio map at all, and/or in case of a high trustworthiness, such one or more pieces of fingerprint information (e.g. another part of all of the obtained one or more pieces of fingerprint information) may for instance be used for generating the radio map in every case.

The step 201 to 203 may for instance be performed and/or controlled more than once, e.g. a plurality of times (e.g. after a pre-defined time period has lapsed). In this way, the respective radio map generated in step 203 may for instance be kept up-to-date.

Fig. 3a is a flowchart 300a showing an example embodiment of a method according to the first exemplary aspect of the present invention. This flowchart 300a may for instance be performed by a server, e.g. server 110 of Fig. 1. This flowchart 300a may for instance be performed in addition to the flowchart 200 of Fig. 2. Any of the steps of flowchart 300a may for instance be performed prior or subsequent to, or in parallel to any of the steps 201 to 203 of the flowchart 200. Any of the steps of flowchart 300a may for instance be performed one or more times.

In a step 301, a respective piece of metrics information is determined. For instance, in case in step 201 of Fig. 2 a respective piece of fingerprint information is obtained (e.g. received) from a collector/user for which a respective piece of metrics information does not exist, a respective piece of metrics information may for instance be determined (e.g. a rank for the collector/user is determined (e.g. calculated) based on one or more certain parameters, variables or criteria (e.g. factors i) to iv)), as disclosed in the above summary section of this specification). Then, the respective piece of metrics information may for instance be stored, as disclosed in step 302. Such one or more certain parameters, variables or criteria may for instance apply to more than one piece of fingerprint information in case (a) respective piece(s) of metrics information that is (are) associated with the respective piece(s) of fingerprint information does (do) not exist. Additionally or alternatively, in case (a) respective piece(s) of metrics information associated with one or more pieces of fingerprint information (obtained in step 201 of Fig. 2) does (do) exist, the respective piece(s) of metrics information may for instance be determined as well, e.g. by updating the respective piece(s) of metrics information. For instance, a respective rank of a respective collector/user may for instance be updated, to name but one non-limiting example.

In a step 302, the respective piece(s) of metrics information that was (were) determined in step 301 is (are) stored, e.g. in a memory. Such a memory may for instance be enabled by a database, e.g. database 120 of Fig. 1 comprised by or connectable to server 110 of Fig. 1.

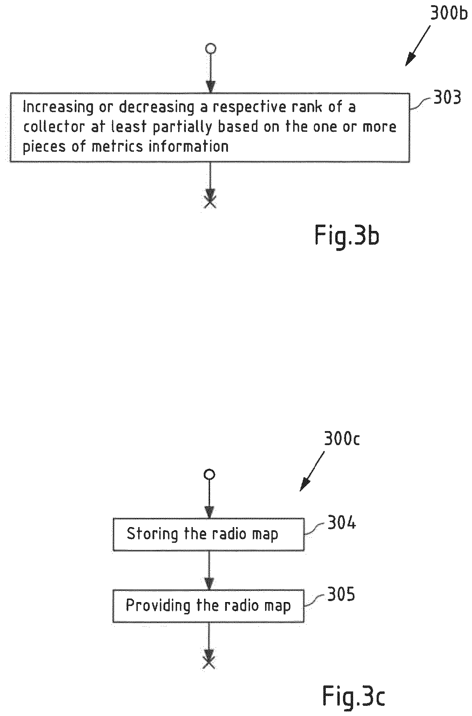

Fig. 3b is a flowchart 300b showing an example embodiment of a method according to the first exemplary aspect of the present invention. This flowchart 300b may for instance be performed by a server, e.g. server 110 of Fig. 1. This flowchart 300b may for instance be performed in addition to the flowchart 200 of Fig. 2, and/or in addition to flowchart 300a of Fig. 3a. Any of the steps of flowchart 300b may for instance be performed prior or subsequent to, or in parallel to any of the steps 201 to 203 of the flowchart 200, and/or to any of the steps 301 to 302 of flowchart 300a of Fig. 3a. Any of the steps of flowchart 300b may for instance be performed one or more times.

In a step 303, a respective rank of a collector respectively users (or one or more respective ranks of one or more collectors/users), e.g. of at least one of the mobile devices 130-1 to 130-3 of Fig. 1 is increased or decreased. The respective rank(s) may for instance be increased or decreased at least partially based on the one or more pieces of metrics information (see step 202 of Fig. 2).

Fig. 3c is a flowchart 300c showing an example embodiment of a method according to the first exemplary aspect of the present invention. This flowchart 300c may for instance be performed by a server, e.g. server 110 of Fig. 1. This flowchart 300c may for instance be performed in addition to the flowchart 200 of Fig. 2, and/or in addition to flowchart 300a of Fig. 3a and/or in addition to flowchart 3b of Fig. 3b. Any of the steps of flowchart 300c may for instance be performed prior or subsequent to, or in parallel to any of the steps 201 to 203 of the flowchart 200, and/or to any of the steps 301 to 302 of flowchart 300a of Fig. 3a, and/or to step 303 of flowchart 300b. Any of the steps of flowchart 300c may for instance be performed one or more times.

In a step 304, the radio map is stored, e.g. in a memory (e.g. database 120 of Fig. 1) comprised by the apparatus performing and/or controlling flowchart 300c, or in an entity that is different from the apparatus, e.g. a server or server cloud. The radio map may for instance be the radio map generated in step 203 of Fig. 2.

In a step 305, the radio map is provided, e.g. to one or more mobile device (e.g. mobile devices 130-1 to 130-3 of Fig. 1), or to another entity that is different from the one or more mobile device, which may for instance relay the radio map to the one or more mobile devices. The radio map that is provided may for instance be the radio map stored in step 304. By providing the radio map, a positioning may for instance be enabled. For instance, the apparatus performing and/or controlling flowchart 300c may for instance be an indoor positioning server or server cloud enabling one or more location-based services, to name but a few non-limiting examples.

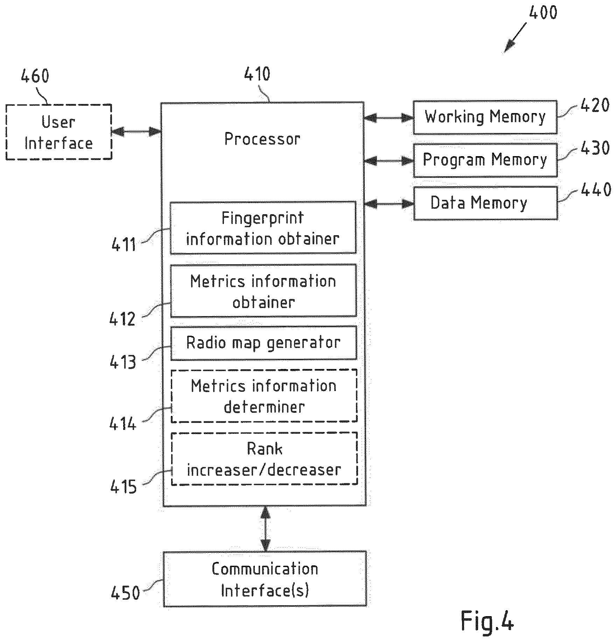

Fig. 4 is a schematic block diagram of an apparatus 400 according to an exemplary aspect of the present invention, which may for instance represent the server 110 of Fig. 1.

Apparatus 400 comprises a processor 410, working memory 420, program memory 430, data memory 440, communication interface(s) 450, and an optional user interface 460.

Apparatus 400 may for instance be configured to perform and/or control or comprise respective means (at least one of 410 to 460) for performing and/or controlling the method according to the first exemplary aspect of the present invention. Apparatus 400 may as well constitute an apparatus comprising at least one processor (410) and at least one memory (420) including computer program code, the at least one memory and the computer program code configured to, with the at least one processor, cause an apparatus, e.g. apparatus 400 at least to perform and/or control the method according to the first exemplary aspect of the invention of the present invention.

Processor 410 may for instance comprise a fingerprint information obtainer 411 as a functional and/or structural unit Fingerprint information obtainer 411 may for instance be configured to obtain one or more pieces of fingerprint information (see step 201 of Fig. 2).

Processor 410 may for instance comprise a metrics information obtainer 412 as a functional and/or structural unit. Metrics information obtainer 412 may for instance be configured to obtain one or more pieces of metrics information (see step 202 of Fig. 2).

Processor 410 may for instance comprise a radio map generator 413 as a functional and/or structural unit. Radio map generator 413 may for instance be configured to generate a radio map (see step 203 of Fig. 2).

Processor 410 may for instance comprise an optional metrics information determiner 414 as a functional and/or structural unit Optional metrics information determiner 414 may for instance be configured to determine one or more pieces of metrics information (see step 301 of Fig. 3a).

Processor 410 may for instance comprise an optional rank increaser/decreaser 415 as a functional and/or structural unit. Optional rank increaser/decreaser 415 may for instance be configured to increase and/or decrease one or more ranks of one or more collectors/users (see step 303 of Fig. 3b).

Processor 410 may for instance further control the memories 420 to 440, the communication interface(s) 450, and the optional user interface 460.

Processor 410 may for instance execute computer program code stored in program memory 430, which may for instance represent a computer readable storage medium comprising program code that, when executed by processor 410, causes the processor 410 to perform the method according to the first exemplary aspect of the present invention.

Processor 410 (and also any other processor mentioned in this specification) may be a processor of any suitable type. Processor 410 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 410 may for instance be an application processor that runs an operating system.

Program memory 430 may also be included into processor 410. This memory may for instance be fixedly connected to processor 410, or be at least partially removable from processor 410, for instance in the form of a memory card or stick. Program memory 430 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 430 may also comprise an operating system for processor 410. Program memory 430 may also comprise a firmware for apparatus 400.

Apparatus 400 comprises a working memory 420, for instance in the form of a volatile memory. It may for instance be a Random Access Memory (RAM) or Dynamic RAM (DRAM), to give but a few non-limiting examples. It may for instance be used by processor 410 when executing an operating system and/or computer program.

Data memory 440 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 440 may for instance store one or more pieces of fingerprint information, one or more pieces of metrics information, one or more radio maps, one or more ranks of one or more collectors/users, or the like, to name but a few non-limiting examples.

Communication interface(s) 450 enable apparatus 400 to communicate with other entities, e.g. with one or more mobile devices 130-1 to 130-3 of Fig. 1, or with one or more radio nodes 1401 to 140-3 of Fig. 1. The communication interface(s) 450 may for instance comprise a wireless interface, e.g. a cellular radio communication interface and/or a WLAN interface) and/or wire-bound interface, e.g. an IP-based interface, for instance to communicate with entities via the Internet.

User interface 460 is optional and may comprise a display for displaying information to a user and/or an input device (e.g. a keyboard, keypad, touchpad, mouse, etc.) for receiving information from a user.

Some or all of the components of the apparatus 400 may for instance be connected via a bus. Some or all of the components of the apparatus 400 may for instance be combined into one or more modules.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature of the invention and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

## Claims

1. A method, comprising:
- obtaining (201) one or more pieces of fingerprint information at least indicative of one or more identifiers of one or more radio nodes (140);
- obtaining (202) one or more pieces of metrics information, wherein each piece of metrics information of the one or more pieces of metrics information is at least indicative of a trustworthiness associated with a respective piece of fingerprint information of the one or more pieces of fingerprint information,
wherein the respective piece of metrics information of the one or more pieces of metrics information is determined to comprise or represent a rank that is assigned to a collector that has gathered a respective piece of fingerprint information of the one or more pieces of fingerprint information;
- comparing one or more pieces of fingerprint information gathered by a respective collector to one or more pieces of fingerprint information gathered by one or more other collectors, wherein the rank of the respective collector is increased in case of one or more matches between the one or more pieces of fingerprint information, and wherein the rank of a respective collector is decreased in case of one or more mismatches between the compared one or more pieces of fingerprint information; and
- generating (203) a radio map at least partially based on the one or more pieces of fingerprint information and the one or more pieces of metrics information, wherein the trustworthiness associated with the one or more pieces of fingerprint information determines whether or not a respective piece of fingerprint information of the one or more pieces of fingerprint information is used in the generating of the radio map.

2. The method according to claim 1, further comprising:
- determining (301) a respective piece of metrics information at least partially based on one or more parameters affecting the rank of a respective collector of a respective piece of fingerprint information of the one or more pieces of fingerprint information; and
- storing (302) the respective piece of metrics information.

3. The method according to claim 1 or claim 2, wherein a low rank of a respective collector assigned to a respective piece of fingerprint information of the one or more pieces of fingerprint information results in that the respective piece of fingerprint information is not utilized in the generating of the radio map.

4. The method according to claim 2 or claim 3, wherein at least a part of the one or more pieces of metrics information is indicative of a performance of the respective collector.
wherein the radio map is generated further based on the performance of a respective collector.

5. The method according to any of the preceding claims, wherein at least a part of a respective piece of fingerprint information of the one or more pieces of fingerprint information is indicative of a pair comprising a location and one or more radio measurements, wherein a respective piece of metrics information is determined by analyzing a density of one or more respective pieces of fingerprint information.

6. The method according to claim 5, wherein a respective piece of metrics information is determined by analyzing a coverage of one or more respective pieces of fingerprint information.

7. The method according to any of the preceding claims, wherein the determining of a respective piece of metrics information is further based on analyzing a number of unique radio nodes, signal strength of radio nodes, and/or signal strength variability.

8. The method according to any of the preceding claims, further comprising:
- blocking the obtaining of one or more pieces of fingerprint information stemming from one or more certain collectors in case one or more ranks assigned to the one or more certain collectors is below a pre-defined threshold value.

9. The method according to any of the preceding claims, wherein a respective piece of fingerprint information of the one or more pieces of fingerprint information is further indicative of one or more pieces of gathered information from one or more sensors, wherein the one or more pieces of metrics information are further determined based on a comparison of the one or more pieces of gathered information from the one or more sensors and one or more input information from a respective collector.

10. The method according to any of the preceding claims, wherein a respective piece of fingerprint information is further indicative of a timestamp information indicative of a date and/or time at which the respective piece of fingerprint information was gathered, wherein the generating of the radio map is further based on the respective timestamp information.

11. The method according to any of the preceding claims, further comprising:
- storing (304) and/or providing (305) the radio map.

12. An apparatus (110, 400) configured to perform and/or control or comprising respective means for performing and/or controlling the method of any of the claims 1 to 11.

13. A tangible computer-readable medium storing computer program code, the computer program code when executed by a processor causing an apparatus to perform and/or control the method of any of the claims 1 to 11.

14. A system (100), comprising:
- at least one apparatus (110, 400) according to claim 12; and
- one or more mobile devices (130) configured to gather one or more pieces of fingerprint information, wherein the one or more pieces of fingerprint information are sent to the at least one apparatus (110, 400).

## Patentansprüche

1. Ein Verfahren, umfassend:
- Erhalten (201) einer oder mehrerer Fingerabdruckinformationen, die zumindest einen oder mehrere Kennungen von einem oder mehreren Funkknoten (140) anzeigen;
- Erhalten (202) einer oder mehrerer Metrikinformationen, wobei jede Metrikinformation der einen oder mehreren Metrikinformationen zumindest eine Vertrauenswürdigkeit anzeigt, die mit einer jeweiligen Fingerabdruckinformation der einen oder mehreren Fingerabdruckinformationen verbunden ist,
wobei die jeweilige Metrikinformation der einen oder mehreren Metrikinformationen bestimmt wird, um einen Rang zu umfassen oder darzustellen, der einem Sammler zugewiesen wird, der eine jeweilige Fingerabdruckinformation der einen oder mehreren Fingerabdruckinformationen gesammelt hat;
- Vergleichen einer oder mehrerer Fingerabdruckinformationen, die von einem jeweiligen Sammler gesammelt wurden, mit einer oder mehreren Fingerabdruckinformationen, die von einem oder mehreren anderen Sammlern gesammelt wurden, wobei der Rang des jeweiligen Sammlers im Falle einer oder mehrerer Übereinstimmungen zwischen der einen oder den mehreren Fingerabdruckinformationen erhöht wird, und wobei der Rang eines jeweiligen Sammlers im Falle einer oder mehrerer Nichtübereinstimmungen zwischen der einen oder den mehreren Fingerabdruckinformationen verringert wird; und
- Erzeugen (203) einer Funkkarte zumindest teilweise auf der Grundlage der einen oder mehreren Fingerabdruckinformationen und der einen oder mehreren Metrikinformationen, wobei die Vertrauenswürdigkeit, die mit der einen oder den mehreren Fingerabdruckinformationen verbunden ist, bestimmt, ob eine jeweilige Fingerabdruckinformation der einen oder mehreren Fingerabdruckinformationen bei der Erzeugung der Funkkarte verwendet wird oder nicht.

2. Das Verfahren nach Anspruch 1, ferner umfassend:
- Bestimmen (301) einer jeweiligen Metrikinformation zumindest teilweise auf der Grundlage eines oder mehrerer Parameter, die den Rang eines jeweiligen Sammlers einer jeweiligen Fingerabdruckinformation der einen oder mehreren Fingerabdruckinformationen beeinflussen; und
- Speichern (302) der jeweiligen Metrikinformation.

3. Das Verfahren nach Anspruch 1 oder Anspruch 2, wobei ein niedriger Rang eines jeweiligen Sammlers, der einer jeweiligen Fingerabdruckinformation der einen oder mehreren Fingerabdruckinformationen zugeordnet ist, dazu führt, dass die jeweilige Fingerabdruckinformation bei der Erstellung der Funkkarte nicht verwendet wird.

4. Das Verfahren nach Anspruch 2 oder Anspruch 3, wobei mindestens ein Teil der einen oder mehreren Metrikinformationen eine Leistung des jeweiligen Sammlers angibt, wobei die Funkkarte ferner auf der Grundlage der Leistung eines jeweiligen Sammlers erzeugt wird.

5. Verfahren nach einem der vorhergehenden Ansprüche, wobei mindestens ein Teil einer jeweiligen Fingerabdruckinformation der einen oder mehreren Fingerabdruckinformationen ein Paar umfassend einen Standort und eine oder mehrere Funkmessungen angibt, wobei eine jeweilige Metrikinformation durch Analyse einer Dichte einer oder mehrerer jeweiliger Fingerabdruckinformationen bestimmt wird.

6. Verfahren nach Anspruch 5, wobei eine jeweilige Metrikinformation durch Analyse einer Abdeckung einer oder mehrerer jeweiliger Fingerabdruckinformationen bestimmt wird.

7. Das Verfahren nach einem der vorhergehenden Ansprüche, wobei das Bestimmen einer jeweiligen Metrikinformation ferner auf der Analyse einer Anzahl einmaliger Funkknoten, der Signalstärke von Funkknoten und/oder der Signalstärkenvariabilität basiert.

8. Das Verfahren nach einem der vorangegangenen Ansprüche, ferner umfassend:
- Blockieren des Erhalts einer oder mehrerer Fingerabdruckinformationen, die von einem oder mehreren bestimmten Sammlern stammen, falls ein oder mehrere Ränge, die dem einen oder den mehreren bestimmten Sammlern zugeordnet sind, unter einem vordefinierten Schwellenwert liegen.

9. Verfahren nach einem der vorhergehenden Ansprüche, wobei eine jeweilige Fingerabdruckinformation der einen oder mehreren Fingerabdruckinformationen ferner eine oder mehrere gesammelte Informationen von einem oder mehreren Sensoren anzeigt, wobei die eine oder mehreren Metrikinformationen ferner auf der Grundlage eines Vergleichs der einen oder mehreren gesammelten Informationen von dem einen oder den mehreren Sensoren und einer oder mehreren Eingangsinformationen von einem jeweiligen Sammler bestimmt werden.

10. Verfahren nach einem der vorhergehenden Ansprüche, wobei eine jeweilige Fingerabdruckinformation ferner eine Zeitstempelinformation angibt, die ein Datum und/oder eine Uhrzeit angibt, zu der die jeweilige Fingerabdruckinformation gesammelt wurde, wobei die Erzeugung der Funkkarte ferner auf der jeweiligen Zeitstempelinformation basiert.

11. Verfahren nach einem der vorangehenden Ansprüche, ferner umfassend:
- Speichern (304) und/oder Bereitstellen (305) der Funkkarte.

12. Vorrichtung (110, 400), die so konfiguriert ist, dass sie das Verfahren nach einem der Ansprüche 1 bis 11 durchführt und/oder steuert oder entsprechende Mittel zur Durchführung und/oder Steuerung des Verfahrens umfasst.

13. Ein greifbares computerlesbares Medium, das Computerprogrammcode speichert, wobei der Computerprogrammcode, wenn er von einem Prozessor ausgeführt wird, eine Vorrichtung veranlasst, das Verfahren nach einem der Ansprüche 1 bis 11 durchzuführen und/oder zu steuern.

14. Ein System (100), umfassend:
- mindestens eine Vorrichtung (110, 400) nach Anspruch 12; und
- eine oder zwei mobile Vorrichtungen (130), die so konfiguriert sind, dass sie eine oder mehrere Fingerabdruckinformationen sammeln, wobei die eine oder mehreren Fingerabdruckinformationen an die mindestens eine Vorrichtung (110, 400) gesendet werden.

## Revendications

1. Méthode comprenant
- obtenir (201) une ou plusieurs informations d'empreinte au moins indicatives d'un ou plusieurs identifiants d'un ou plusieurs noeuds radio (140) ;
- obtenir (202) une ou plusieurs informations métriques, où chaque information métrique de l'une ou des plusieurs informations métriques sont au moins indicative d'une fiabilité associée à une information d'empreinte respective de l'une ou des les plusieurs informations d'empreinte,
où l'information métrique respective de l'une ou des plusieurs informations métriques est déterminée pour comprendre ou représenter un rang qui est attribué à un collecteur qui a recueilli une information d'empreinte respective de l'une ou des plusieurs informations d'empreinte ;
- comparer une ou plusieurs informations d'empreinte recueillies par un collecteur respective à une ou plusieurs informations d'empreinte recueillies par un ou par plusieurs autres collecteurs, où le rang du collecteur respective est augmenté en cas d'un ou de plusieurs concordances entre l'une ou les plusieurs informations d'empreinte, et où le rang d'un collecteur respective est diminué en cas d'un ou de plusieurs non-concordances entre l'une ou les plusieurs informations d'empreinte comparées ; et
- générer (203) une carte radio au moins partiellement basée sur l'une ou les plusieurs informations d'empreinte et l'une ou les plusieurs informations métriques, où la fiabilité associée à l'une ou les plusieurs informations d'empreinte détermine si une information d'empreinte respective parmi l'une ou les plusieurs informations d'empreinte est utilisée ou non dans la génération de la carte radio.

2. La méthode selon la revendication 1, comprenant en outre :
- déterminer (301) une information métrique respectif au moins partiellement basée sur un ou plusieurs paramètres affectant le rang d'un collecteur respectif d'une information d'empreinte respectif parmi l'une ou les plusieurs informations d'empreinte ; et
- stocker (302) les informations métriques correspondantes.

3. La méthode selon la revendication 1 ou la revendication 2, où un rang inférieur d'un collecteur respective attribué à une information d'empreinte parmi l'une ou les plusieurs informations d'empreinte a pour conséquence que l'information d'empreinte respective n'est pas utilisé dans la génération de la carte radio.

4. La méthode selon la revendication 2 ou la revendication 3, où au moins une partie de la ou des informations métriques est indicative d'une performance du collecteur respectif, où la carte radio est générée en outre basé sur la performance d'un collecteur respectif.

5. La méthode selon l'une des revendications précédentes, où au moins une partie d'une information d'empreinte respective de l'une ou des plusieurs informations d'empreinte est indicative d'une paire comprenant un emplacement et une ou plusieurs mesures radio, où une information métrique respective est déterminée en analysant une densité d'une ou plusieurs informations d'empreinte respectives.

6. La méthode selon la revendication 5, où une information métrique respective est déterminé en analysant une couverture d'un ou plusieurs informations d'empreinte.

7. La méthode selon l'une des revendications précédentes, où la détermination d'une information métrique respectif est en outre basée sur une analyse d'un nombre de noeuds radio uniques, d'une puissance de signal de noeuds radio et/ou d'une variabilité de puissance de signal.

8. La méthode selon l'une des revendications précédentes, comprenant en outre
- bloquer l'obtention d'une ou plusieurs informations d'empreinte provenant d'un ou plusieurs collecteurs certains si un ou plusieurs rangs attribués à l'un ou les plusieurs collecteurs certains est inférieur à une valeur seuil prédéfinie.

9. La méthode selon l'une des revendications précédentes, où une information d'empreinte de l'une ou des plusieurs informations d'empreinte indique en outre un ou plusieurs éléments d'information recueillis par un ou plusieurs capteurs, où l'un ou plusieurs informations métriques sont en outre déterminés sur la base d'une comparaison entre les un ou plusieurs informations recueillis par l'un ou les plusieurs capteurs et un ou plusieurs éléments d'information de saisi d'un collecteur respectif.

10. La méthode selon l'une des revendications précédentes, où une information d'empreinte est en outre indicative d'un horodatage indiquant une date et/ou une heure à laquelle l'information d'empreinte a été recueilli, où la génération de la carte radio est basée sur l'horodatage respectif.

11. La méthode selon l'une des revendications précédentes, comprenant en outre :
- stocker (304) et/ou fournir (305) la carte radio.

12. Appareil (110, 400) configuré pour exécuter et/ou contrôler ou comprenant des moyens respectifs pour exécuter et/ou contrôler la méthode de l'une des revendications 1 à 11.

13. Support tangible lisible par ordinateur stockant un code de programme d'ordinateur, le code de programme d'ordinateur, lorsqu'il est exécuté par un processeur, cause un appareil d'exécuter et/ou de contrôler la méthode de l'une des revendications 1 à 11.

14. Système (100) comprenant
- au moins un appareil (110, 400) selon la revendication 12 ; et
- un ou plusieurs dispositifs mobiles (130) configurés pour recueillir une ou plusieurs informations d'empreintes, où les informations d'empreintes sont envoyées à l'au moins un appareil (110, 400).
